(19) Europäisches Patentamt
European Patent Office
Office européen des brevets

(11) **EP 3 128 667 B1**

(12) **FASCICULE DE BREVET EUROPEEN**

(45) Date de publication et mention
de la délivrance du brevet:
**28.02.2024   Bulletin 2024/09**

(21) Numéro de dépôt: **16172900.9**

(22) Date de dépôt: **03.06.2016**

(51) Classification Internationale des Brevets (IPC):
*H02P 21/34* (2016.01)     *H02P 1/46* (2006.01)
*H02P 6/20* (2016.01)     *H02P 21/00* (2016.01)
*H02P 1/52* (2006.01)

(52) Classification Coopérative des Brevets (CPC):
**H02P 1/46; H02P 6/20; H02P 21/34**

(54) **PROCÉDÉ DE COMMANDE POUR LE DÉMARRAGE D'UN MOTEUR ÉLECTRIQUE SYNCHRONE**

STEUERUNGSVERFAHREN ZUM ANLASSEN EINES ELEKTRISCHEN SYNCHRONMOTORS

CONTROL METHOD FOR STARTING A SYNCHRONOUS ELECTRIC MOTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **01.07.2015   FR 1556191**

(43) Date de publication de la demande:
**08.02.2017   Bulletin 2017/06**

(73) Titulaire: **Schneider Toshiba Inverter Europe SAS
27120 Pacy sur Eure (FR)**

(72) Inventeurs:
  • **JEBAI, Al Kassem
    27120 Vernon (FR)**
  • **MALRAIT, François
    27120 Jouy sur Eure (FR)**
  • **DEVOS, Thomas
    78955 Carrières sous Poissy (FR)**

(74) Mandataire: **Plasseraud IP
66, rue de la Chaussée d'Antin
75440 Paris Cedex 09 (FR)**

(56) Documents cités:
**EP-A1- 1 213 828     JP-A- 2004 282 972
US-A- 5 998 957     US-A1- 2013 147 410**

**Description**

**Domaine technique de l'invention**

La présente invention se rapporte à un procédé de commande mis en oeuvre dans un variateur de vitesse pour le démarrage d'un moteur électrique connecté audit variateur de vitesse. Le procédé de commande s'applique au démarrage d'un moteur électrique synchrone et permet d'aligner le rotor de ce moteur avec une position de référence.

**Etat de la technique**

Il existe un grand nombre de méthodes différentes mises en oeuvre dans un variateur de vitesse pour déterminer la position initiale du rotor d'un moteur électrique synchrone à aimant permanent.

De manière connue, un variateur de vitesse comporte un module redresseur qui fournit une tension continue à partir d'un réseau d'alimentation alternatif extérieur et un module onduleur (ou hacheur). Ce module onduleur comprend des composants électroniques semi-conducteurs de puissance pour hacher la tension continue en Modulation de Largeur d'impulsion (MLI ou Pulse Width Modulation PWM), de façon à fournir en sortie via un câble de puissance une tension électrique variable pulsée et une fréquence de rotation variable au moteur. Un dispositif de commande du variateur contrôle la conduction et le blocage des composants semi-conducteurs à la fréquence d'échantillonnage, pour commander le moteur en MLI avec une tension variable appropriée.

Un variateur de vitesse fonctionnant en boucle fermée pour la commande d'un moteur synchrone à aimants permanents utilise généralement un capteur de position absolue du rotor. Cependant, ce type de capteur présente un coût particulièrement élevé et des problèmes de fiabilité (nécessité d'un câble supplémentaire, sensibilité au bruit électromagnétique ...). Il est donc connu du document JP1060287 d'utiliser un encodeur incrémental pour connaître la position relative du rotor. Cependant l'emploi d'un encodeur incrémental nécessite de connaître la position initiale du rotor.

Le document US 7,202,618 propose une solution qui est mise en oeuvre dans un variateur de vitesse pour déterminer la position initiale du rotor dans un moteur électrique triphasé. Cette solution consiste à envoyer des impulsions de tension sur chacune des phases du moteur pendant une période déterminée et à déterminer les pics de courants ayant circulés dans les phases du moteur. Ensuite, par comparaison entre les courants obtenus pour chaque phase et à partir de relations entre les courants, la position initiale du rotor peut être obtenue sans calcul. Dans une variante, des tables mémorisées permettent de déterminer sans calcul la position initiale du rotor. Dans ce document, la position initiale du rotor est certes obtenue sans calcul mais les différentes solutions proposées sont complexes et longues à mettre en oeuvre à chaque démarrage du moteur. De plus, ces méthodes sont basées sur des effets secondaires du moteur (saturation magnétique, saillance ...). Cependant, il y a des moteurs qui n'ont pas suffisamment de saillance et d'autres où la saturation magnétique n'a pas l'effet attendu. Ces méthodes antérieures peuvent donc s'avérer défaillantes.

Une autre méthode de détermination de la position initiale du rotor dans un moteur électrique synchrone est décrite dans la demande de brevet EP1213828A1. Dans ce document, l'algorithme présenté consiste à générer une commande de vitesse, à déterminer une commande de couple à appliquer en fonction de la commande de vitesse et de la vitesse mesurée, puis à déterminer l'angle initial à partir de la commande de couple calculée. On comprend donc que l'angle initial est déduit de la différence entre la commande de vitesse et la vitesse mesurée.

Le but de l'invention est de proposer un procédé de commande d'un moteur électrique synchrone qui permette un alignement du rotor simple, fiable et sans contrainte en termes de durée d'alignement et de couple appliqué au démarrage. Ce procédé est basé sur le modèle fondamental du moteur et n'utilise pas les effets secondaires ou non linéaires. Ainsi il est robuste et applicable à tous les types de moteurs synchrones (avec aimant à l'intérieur du rotor - IPM, avec aimant sur la surface du rotor - SPM ou moteur à reluctance variable - SynRM).

**Exposé de l'invention**

Ce but est atteint par un procédé de commande mis en oeuvre dans un variateur de vitesse pour le démarrage d'un moteur électrique synchrone doté d'un rotor et connecté par des phases de sortie audit variateur de vitesse, ledit procédé comprenant des étapes de :

- application en entrée d'une vitesse de référence suivant un profil de vitesse continu prédéfini, ledit profil de vitesse débutant par une valeur initiale nulle, suivie d'une pente croissante jusqu'à une valeur maximale puis d'une pente décroissante vers une valeur finale nulle, afin de faire tourner le rotor dudit moteur,
- détermination d'une position de référence à partir de la vitesse de référence appliquée en entrée,
- détermination d'une tension dans un repère tournant à la vitesse du moteur électrique, à partir de la vitesse de référence appliquée en entrée,
- détermination de tensions de commande à appliquer sur chaque phase de sortie en fonction d'une part de la position de référence déterminée et d'autre part de ladite tension déterminée dans le repère tournant,

- application des tensions de commande sur chaque phase de sortie pour obtenir un alignement de la position du rotor dudit moteur sur la position de référence.

Selon un premier mode de réalisation, l'étape de détermination de la tension dans le repère tournant est réalisée avec contrôle du courant et consiste à :

- mesurer les courants circulant sur les phases de sortie,

- transformer ces courants mesurés sur les trois phases de sortie en courant de flux mesuré et courant de couple mesuré,

- déterminer un courant de flux de référence et un courant de couple de référence à partir de la vitesse de référence injectée en entrée,

- déterminer la tension dans le repère tournant grâce à un régulateur à action proportionnelle intégrale recevant en entrée le courant de flux mesuré, le courant de couple mesuré, le courant de flux de référence et le courant de couple de référence.

Selon un deuxième mode de réalisation, l'étape de détermination de la tension dans le repère tournant est réalisée sans contrôle du courant en appliquant une loi de commande de type U/F.
L'invention concerne également un système de commande agencé dans un variateur de vitesse pour le démarrage d'un moteur électrique synchrone doté d'un rotor et connecté par des phases de sortie audit variateur de vitesse, ledit système comprenant :

- un module d'application en entrée d'une vitesse de référence suivant un profil de vitesse continu prédéfini, ledit profil de vitesse débutant par une valeur initiale nulle, suivie d'une pente croissante jusqu'à une valeur maximale puis d'une pente décroissante vers une valeur finale nulle, afin de faire tourner le rotor dudit moteur,
- un module de détermination d'une position de référence à partir de la vitesse de référence appliquée en entrée,
- un module de détermination d'une tension dans un repère tournant à la vitesse du moteur électrique, à partir de la vitesse de référence appliquée en entrée,
- un module de détermination de tensions de commande à appliquer sur chaque phase de sortie en fonction d'une part de la position de référence déterminée et d'autre part de ladite tension déterminée dans le repère tournant,
- un module d'application des tensions de commande sur chaque phase de sortie pour obtenir un alignement de la position du rotor dudit moteur sur la position de référence.

Selon une première variante de réalisation, le module de détermination de la tension dans le repère tournant est mis en oeuvre avec contrôle du courant et comporte :

- un module de mesure des courants circulant sur les phases de sortie,

- un module de transformation des courants mesurés sur les trois phases de sortie en courant de flux mesuré et courant de couple mesuré,

- un module de détermination d'un courant de flux de référence et d'un courant de couple de référence à partir de la vitesse de référence injectée en entrée,

- un module de détermination de la tension dans le repère tournant grâce à un régulateur à action proportionnelle intégrale recevant en entrée le courant de flux mesuré, le courant de couple mesuré, le courant de flux de référence et le courant de couple de référence.

Selon un deuxième mode de réalisation, le module de détermination de la tension dans le repère tournant est mis en oeuvre sans contrôle du courant en appliquant une loi de commande de type U/F.
On comprend de cet exposé général de l'invention que la solution ne consiste pas en une détermination de l'angle initial du rotor comme c'est souvent le cas dans les solutions de l'état de la technique. Dans la présente invention, il s'agit en effet de déterminer une commande pour aligner le rotor sur une position de référence choisie et définie par la trajectoire de vitesse de référence appliquée en entrée.

**Brève description des figures**

D'autres caractéristiques et avantages vont apparaître dans la description détaillée qui suit faite en regard des dessins annexés dans lesquels :

- la figure 1 représente le schéma d'un variateur de vitesse connecté à un moteur électrique synchrone,
- la figure 2 représente de manière schématique le synoptique du procédé de commande de l'invention,
- la figure 3 illustre la représentation vectorielle d'un moteur synchrone dans un repère tournant,
- les figures 4A à 4D illustrent des résultats de simulation pour une première situation de fonctionnement,
- les figures 5A à 5D illustrent des résultats de simulation pour une deuxième situation de fonctionnement,
- les figures 6A à 6D illustrent des résultats de simulation pour une troisième situation de fonctionnement.

**Description détaillée d'au moins un mode de réalisation**

Le procédé de commande de l'invention est mis en oeuvre dans un variateur de vitesse pour le démarrage d'un moteur électrique synchrone. Le procédé de commande s'applique pour tout moteur électrique synchrone, par exemple de type à réluctance variable, à aimant permanent lisse ou saillant,...

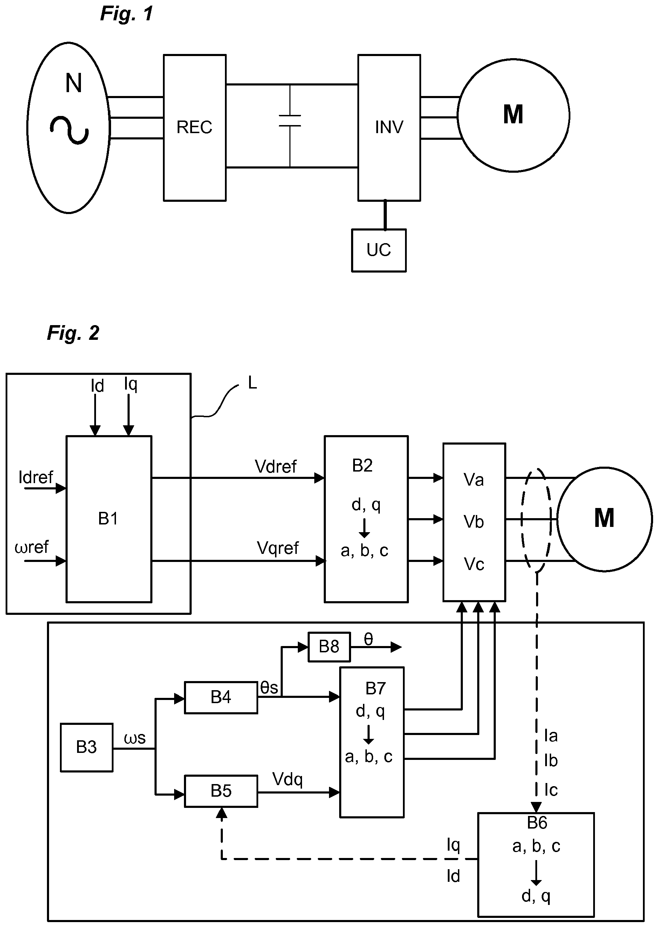

En référence à la figure 1, le variateur de vitesse est connecté en amont à un réseau de distribution électrique N par trois phases d'entrée R, S, T. De manière connue, le variateur de vitesse comporte un étage d'entrée composé d'un redresseur REC, par exemple de type pont de diodes, agencé pour redresser la tension alternative fournie par le réseau N. Le variateur de vitesse comporte également un bus continu d'alimentation connecté au redresseur et comprenant deux lignes d'alimentation reliées entre elles par un ou plusieurs condensateurs de bus. Le variateur de vitesse comporte également un étage de sortie composé d'un onduleur INV recevant une tension continue fournie par le bus continu d'alimentation et commandé pour fournir des tensions variables en sortie au moteur électrique M synchrone, sur trois phases de sortie a, b, c.

De manière connue, l'unité de commande UC du variateur de vitesse met en oeuvre une loi de commande principale L pour commander l'onduleur et déterminer les tensions de sortie nécessaires au fonctionnement du moteur électrique M (bloc B1 sur la figure 2). Classiquement, cette loi de commande principale L comporte en entrée une vitesse de référence ωref à partir de laquelle elle détermine un courant de couple de référence (non représenté). Elle reçoit également en entrée un courant de flux de référence Idref. A partir du courant de couple de référence et du courant de flux de référence et des mesures ou estimations du courant de flux Id et du courant de couple Iq, elle détermine des tensions de référence Vdref, Vqref à partir desquelles sont déterminées les tensions simples Va, Vb, Vc à appliquer sur chaque phase de sortie (bloc B2).

Au démarrage du moteur électrique M synchrone, la position du rotor est inconnue de l'unité de commande UC du variateur de vitesse empêchant la mise en oeuvre de la loi de commande principale L. Au démarrage du moteur électrique M synchrone, selon l'invention, une séquence spécifique est mise en oeuvre pour aligner le rotor sur une position connue. Le procédé de commande de l'invention permet de créer une séquence de démarrage (ST, figure 2) en rotation du moteur. Pour le démarrage du moteur électrique synchrone, le procédé de commande de l'invention se substitue ainsi à la loi de commande principale L.

En référence à la figure 2, le procédé de commande de l'invention, mis en oeuvre dans l'unité de commande UC pour le démarrage du moteur électrique synchrone, consiste à appliquer en entrée une vitesse de référence ωs qui suit un profil prédéfini généré par un module spécifique (bloc B3). Dans le cadre de l'invention, le profil prédéfini répond à certaines contraintes qui sont les suivantes :

- la courbe du profil suit une fonction continue de classe au moins équivalente à C0,

- la vitesse de référence ωs initiale est nulle,

- la vitesse de référence ωs prend au moins une valeur non nulle afin de faire tourner le rotor,

- la vitesse de référence finale est nulle.

Avantageusement, le profil prédéfini comporte une valeur initiale nulle, suit une pente croissante jusqu'à une valeur maximale, puis une pente décroissante vers une valeur finale nulle. La valeur maximale de vitesse est déterminée en fonction du nombre de tours à appliquer au moteur électrique et de la durée d'alignement souhaitée. La fréquence maximale qui correspond à la valeur maximale de la vitesse appliquée au moteur suit ainsi la relation suivante :

$$F_{DcMax} = \frac{2 \times \text{RndNLD}}{T_{pw} + T_{mw}}$$

Dans laquelle :

- RndNLD est le nombre des tours,
- $(T_{pw} + T_{mw})$ est la durée totale pour l'alignement,
- $F_{DcMax}$ est la fréquence maximale de rotation en Hz
- La relation entre la vitesse maximale $\omega_{sMax}$ et la fréquence maximale $F_{DcMax}$ est : $\omega_{sMax} = 2\pi F_{DcMax}$

En référence à la figure 2, à partir de la vitesse de référence qui suit le profil prédéfini décrit ci-dessus, le procédé de commande de l'invention détermine :

- une position de référence θs (bloc B4) vers laquelle la position réelle du rotor doit tendre. La position de référence θs correspond à l'intégrale de la vitesse de référence ωs. L'expression de la fréquence de référence $f_s$ est :

$$f_s(t) =$$
$$\begin{cases} F_{DcMax}\left(3\left(\frac{t}{T_{pw}}\right)^2 - 2\left(\frac{t}{T_{pw}}\right)^3\right) & si \quad t < T_{pw} \\ F_{DcMax}\left(1 - 3\left(\frac{t-T_{pw}}{T_{mw}}\right)^2 + 2\left(\frac{t-T_{pw}}{T_{mw}}\right)^3\right) & si \ T_{pw} \le t \le T_{pw} + T_{mw} \\ 0 & sinon \end{cases}$$

- avec la fréquence de référence fs reliée à la vitesse de référence par $\omega_s = 2\pi f_s$,
- FDcMax est la valeur maximale de la fréquence de référence,
- $T_{pw}$ est le temps de montée de la fréquence de zéro à FDcMax,
- $T_{mw}$ est le temps de descente de la fréquence de FDcMax à zéro.
- t est la durée depuis le début de la séquence d'alignement.
- La position de référence est obtenue par l'intégrale de la fréquence de référence comme suivant :
$$\theta_s = \int_0^t 2\pi f_s(u)du$$
- 

- La tension Vdq (bloc B5) à appliquer au moteur est déterminée avec contrôle ou sans contrôle du courant.

En référence à la figure 2, la détermination de la tension de couple et de la tension de flux avec contrôle du courant consiste à :

- mesurer les courants ia, ib, ic circulant sur les phases de sortie,
- transformer (bloc B6) ces courants mesurés sur les trois phases de sortie en courant de flux et courant de couple, grâce une transformation de Park,
- déterminer (bloc B5) un courant de flux de référence idref et un courant de couple de référence iqref à partir de la vitesse de référence injectée en entrée et qui suit le profil prédéfini ci-dessus,
- déterminer (bloc B5) la tension Vdq dans le repère tournant d,q grâce à un régulateur à action proportionnelle intégrale recevant en entrée le courant de flux id mesuré, le courant de couple iq mesuré, le courant de flux de référence idref et le courant de couple de référence iqref.

Le courant de flux et le courant de couple de référence s'exprime par la relation suivante :

$$i_{dq}^{ref} = \begin{cases} i_{dqMax}\dfrac{t}{t_i} & si \quad t < t_i \\ i_{dqMax} & si \ t_i \le t \le T_{pw} + T_{mw} + T_{DcCurr} \\ 0 & sinon \end{cases}$$

Dans laquelle :

- $i_{dMax}$ est la valeur maximale du courant sur l'axe d.
- $i_{qMax}$ est la valeur maximale du courant sur l'axe q.
- $t_i$ est le temps de la rampe du courant au démarrage.
- $T_{DcCurr}$ est le temps du maintien du courant à la fin de la séquence d'alignement. Le but de ce courant continu à la fin de la séquence d'alignement est de s'assurer que le moteur est à l'arrêt à la position souhaitée.

En variante de réalisation, la détermination de la tension Vdq sans contrôle du courant (c'est-à-dire en boucle ouverte, sans mesure des courants) consiste à :

- Déterminer (bloc B5) la tension de manière proportionnelle à la vitesse de référence (loi de commande de type U/F).

A partir de la tension Vdq et de la position de référence déterminée, le procédé de commande peut déterminer (bloc B7) les tensions à appliquer sur les trois phases de sortie en vue de permettre l'alignement du rotor sur une position connue. Les tensions de sortie s'expriment de la manière suivante :

$$\begin{pmatrix} v_a \\ v_b \\ v_c \end{pmatrix} = \begin{pmatrix} 1 & 0 & \frac{\sqrt{2}}{2} \\ -\frac{1}{2} & \frac{\sqrt{3}}{2} & \frac{\sqrt{2}}{2} \\ -\frac{1}{2} & -\frac{\sqrt{3}}{2} & \frac{\sqrt{2}}{2} \end{pmatrix} \begin{pmatrix} cos\theta_S & -sin\theta_S \\ sin\theta_S & cos\theta_S \end{pmatrix} \begin{pmatrix} v_d \\ v_q \end{pmatrix}$$

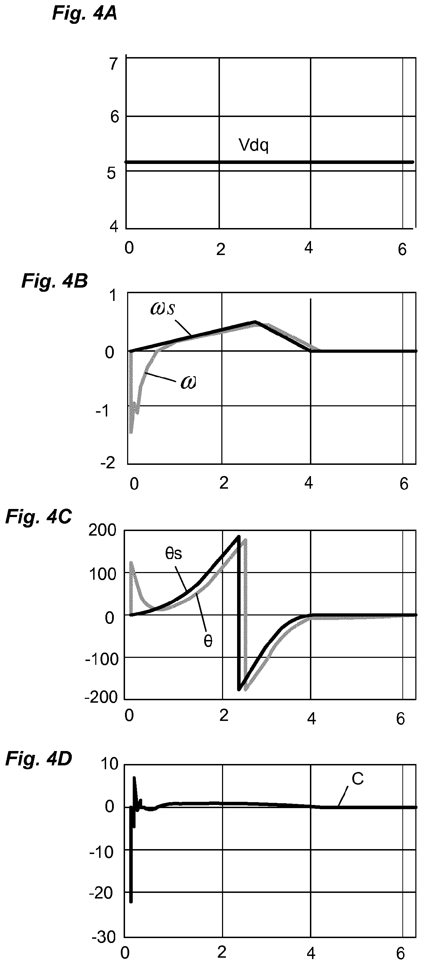

Les figures 4A à 4D, 5A à 5D et 6A à 6D illustrent des résultats de simulation pour différents cas de fonctionnement.

Dans un premier cas de fonctionnement illustré par les figures 4A à 4D, la tension Vdq générée suit une constante (figure 4A) et la vitesse de référence suit un profil prédéfini de classe C0 (figure 4B). La figure 4C montre que la position réelle du rotor rejoint la position de référence au bout du processus de démarrage. La figure 4D montre que le couple C reste constant et que le processus de démarrage employé ne génère pas d'à-coups sur le moteur.

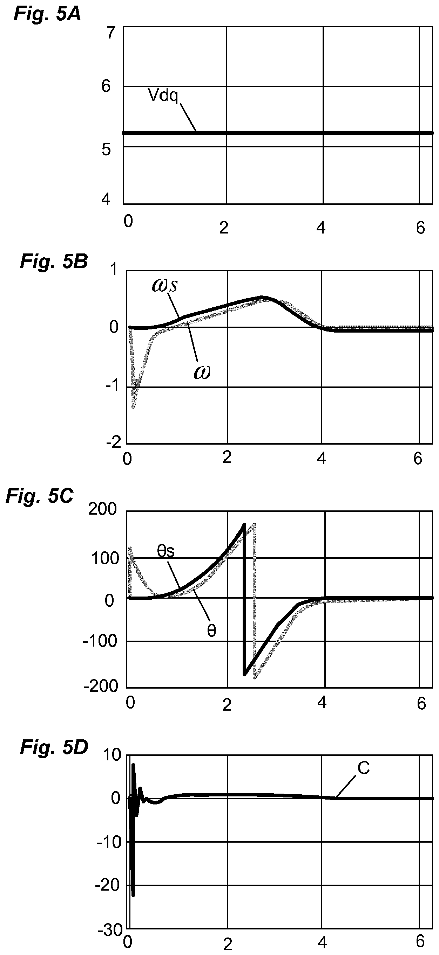

Dans un deuxième cas de fonctionnement illustré par les figures 5A à 5D, la tension Vdq générée suit une constante (figure 5A) et la vitesse de référence suit un profil prédéfini de classe C1 (figure 5B). La figure 5C montre que la position réelle du rotor rejoint la position de référence au bout du processus de démarrage. La figure 5D montre que le couple C reste constant et que le processus de démarrage employé ne génère pas d'à-coups sur le moteur.

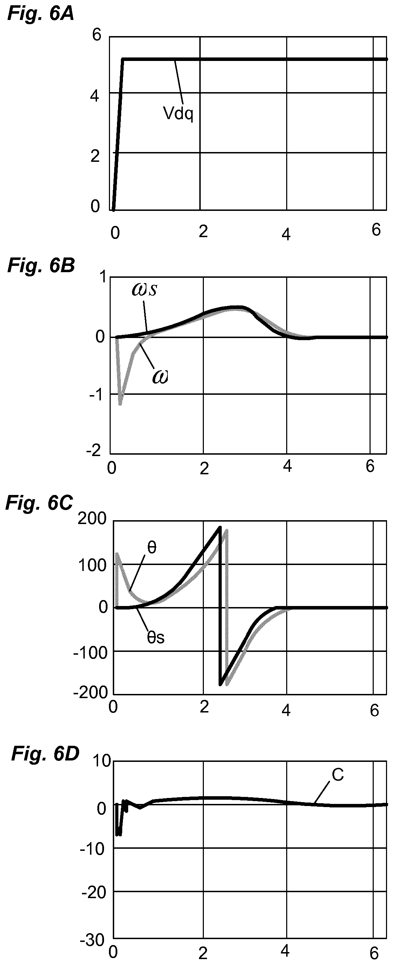

Dans un troisième cas de fonctionnement illustré par les figures 6A à 6D, la tension Vdq générée suit une trajectoire non constante mais continue (figure 6A) et la vitesse de référence suit un profil prédéfini de classe C1 (figure 6B). La figure 6C montre que la position réelle du rotor rejoint la position de référence au bout du processus de démarrage. La figure 6D montre que le couple C reste constant et que le processus de démarrage employé ne génère pas d'à-coups sur le moteur.

Sur la figure 2, on peut noter que la position de référence θs déterminée sur laquelle vient s'aligner le rotor, permet de déduire directement la position réelle θ du rotor (bloc B8), celle-ci pouvant être utile dans la commande en fonctionnement normal du moteur.

La démonstration qui suit permet de montrer que :

- Il existe des points d'équilibre au système, en fonction de la charge appliquée sur le moteur et de la tension qu'on lui applique,
- Ces points d'équilibre sont stables ou instables,
- Que le point d'équilibre qui nous intéresse (erreur d'angle minimum) est stable et atteignable.

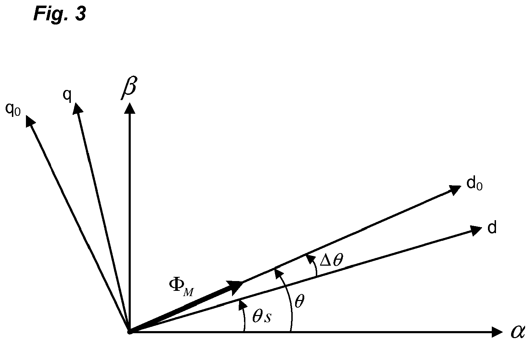

Les équations d'un moteur synchrone dans un repère tournant (figure 3) s'écrivent de la manière suivante :

$$\begin{cases} \dfrac{d}{dt}\phi_{dq} = u_{dq} - Ri_{dq} - \omega_s \mathbb{J}\phi_{dq} - \omega\mathbb{J}\mathbb{R}_{\Delta\theta}\phi_M \\[2mm] \dfrac{J_M}{n_p}\dfrac{d\omega}{dt} = \dfrac{3}{2}n_p i_{dq}^T \mathbb{J}\big(\phi_{dq} + \mathbb{R}_{\Delta\theta}\phi_M\big) - \mathsf{T_L} - \mathsf{f}\omega \\[2mm] \qquad\qquad \dfrac{d}{dt}\Delta\theta = \omega - \omega_s \end{cases}$$

Dans lesquelles :

- $\phi_{dq} = \begin{pmatrix} \phi_d \\ \phi_q \end{pmatrix}$ est le flux électrique,

- $i_{dq} = \begin{pmatrix} i_d \\ i_q \end{pmatrix}$ est le courant du moteur,

- $\phi_M = \begin{pmatrix} \varphi_M \\ 0 \end{pmatrix}$ est le flux de l'aimant permanant,

- $u_{dq} = \begin{pmatrix} u_d \\ u_q \end{pmatrix}$ est la tension du moteur dans le repère tournant,

- $R, Ld, Lq$ et $\varphi_M$ sont les paramètres électriques du moteur,
- $J_M$ et $n_p$ sont les paramètres mécaniques du moteur,
- $f$ est le coefficient de frottement,
- $T_L$ est le couple de charge,
-

$$\mathbb{L}_{dq} = \begin{pmatrix} L_d & 0 \\ 0 & L_q \end{pmatrix} = \lambda\,\mathbb{I} - \mu\,\mathbb{Z} = \begin{pmatrix} \lambda - \mu & 0 \\ 0 & \lambda + \mu \end{pmatrix}, \lambda = (L_q + L_d)/2\,, \mu = (L_q - L_d)/2$$

-

$$\phi_{dq} = \mathbb{R}_{\Delta\theta}\mathbb{L}_{dq}\mathbb{R}_{-\Delta\theta}i_{dq} = \lambda i_{dq} - \mu\mathbb{R}_{\Delta\theta}\mathbb{Z}\mathbb{R}_{-\Delta\theta}i_{dq}\ ,$$

- $\theta_s$ est l'angle du contrôle, c'est-à-dire la position de référence,
- $\theta$ est la position réelle du rotor,
- $\Delta\theta = \theta - \theta_s$
- $\omega_s = \dfrac{d\theta_s}{dt},\ \ \omega = \dfrac{d\theta}{dt},$
-

$$\mathbb{I} = \begin{pmatrix} 1 & 0 \\ 0 & 1 \end{pmatrix},\ \ \mathbb{J} = \begin{pmatrix} 0 & -1 \\ 1 & 0 \end{pmatrix},\ \ \mathbb{Z} = \begin{pmatrix} 1 & 0 \\ 0 & -1 \end{pmatrix},$$

-

$$\mathbb{R}_{\Delta\theta} = \begin{pmatrix} \cos\Delta\theta & -sin\,\Delta\theta \\ \sin\Delta\theta & \cos\Delta\theta \end{pmatrix}.$$

Le contrôle du moteur est fait via la tension d'entrée et $u_{dq}$ et la vitesse de référence $\omega_s$. Comme la partie électrique est la plus rapide, et sans perte de généralité, nous considérons que le courant du moteur converge rapidement vers la référence du courant :

$$i_{dq} = \bar{\imath}_{dq}$$

Dans laquelle $\bar{\imath}_{dq}$ est la référence du courant.

A titre d'exemple, nous détaillons ci-dessous la preuve de stabilité pour un moteur synchrone surfacique qui a les caractéristiques suivantes: $L_d = L_q = L$ et $\mu = 0$.

Ainsi, pour prouver la convergence de l'angle il faut étudier les équations mécaniques du moteur qui s'écrivent dans ce cas comme suivant:

$$\begin{cases} \dfrac{J_M}{n_p}\dfrac{d\omega}{dt} = \dfrac{3}{2}n_p\bar{\imath}_{dq}^T \mathbb{J}\left(\bar{\phi}_{dq} + \mathbb{R}_{\Delta\theta}\phi_M\right) - \tau_L - f\omega \\[2mm] \dfrac{d}{dt}\Delta\theta = \omega - \omega_s \end{cases}$$

Avec $\overline{\phi}_{dq} = L\bar{\imath}_{dq}$

Points d'équilibre:

Dans ce cas, le point d'équilibre est défini par :

$$\begin{cases} 0 = \dfrac{3}{2}n_p\bar{\imath}_{dq}^T \mathbb{J}\left(L\bar{\imath}_{dq} + \mathbb{R}_{\Delta\theta^{eq}}\phi_M\right) - \tau_L - f\omega^{eq} \\[2mm] 0 = \omega^{eq} - \omega_s \end{cases}$$

Où $\Delta\theta^{eq}$ et $\omega^{eq}$ sont les positions d'équilibre du système.
Nous proposons d'écrire les références des courants en format polaire comme suivant :

$$\bar{\imath}_d = I\cos\alpha$$

$$\bar{\imath}_q = I\sin\alpha$$

Ainsi, l'équilibre est défini par :

$$\begin{cases} 0 = \dfrac{3}{2}n_p\varphi_M I\sin(\alpha - \Delta\theta^{eq}) - \tau_L - f\omega_s \\[2mm] \omega^{eq} = \omega_s \end{cases}$$

Finalement on obtient :

$$\begin{cases} \sin(\alpha - \Delta\theta^{eq}) = \dfrac{\tau_L + f\omega_s}{\dfrac{3}{2}n_p\varphi_M I} \\[2mm] \omega^{eq} = \omega_s \end{cases}$$

Il y a deux points d'équilibre possibles :

$$\Delta\theta^{eq} = \alpha - \alpha_0 \quad \text{ou} \quad \Delta\theta^{eq} = \alpha + \alpha_0 - \pi$$

Avec $\alpha_0 = \arcsin\left(\dfrac{\tau_L + f\omega_s}{\frac{3}{2}n_p\varphi_M I}\right)$, il est à noter que $-\dfrac{\pi}{2} \leq \alpha_0 \leq \dfrac{\pi}{2}$

Stabilité autour des points d'équilibre

Le système s'écrit comme suivant :

$$\begin{cases} \dfrac{J_M}{n_p}\dfrac{d\omega}{dt} = \dfrac{3}{2} n_p \varphi_M I (\sin(\alpha - \Delta\theta) - \sin\alpha_0) - f(\omega - \omega_s) \\[2mm] \dfrac{d}{dt}\Delta\theta = \omega - \omega_s \end{cases}$$

La linéarisation de ce système autour de l'équilibre $(\Delta\theta^{eq}, \omega^{eq})$ donne :

$$\left\{\dfrac{d}{dt}\begin{pmatrix} \delta\omega \\ \delta\Delta\theta \end{pmatrix} = \begin{pmatrix} -\dfrac{f\,n_p}{J_M} & -\dfrac{3n_p^2\varphi_M I}{2J_M}\cos(\alpha - \Delta\theta^{eq}) \\ 1 & 0 \end{pmatrix}\begin{pmatrix} \delta\omega \\ \delta\Delta\theta \end{pmatrix}\right.$$

Avec $\delta\omega = \omega - \omega^{eq}$ et $\delta\Delta\theta = \Delta\theta - \Delta\theta^{eq}$.

Les valeurs propres de la matrice de stabilité sont données par :

$$X^2 + \dfrac{f\,n_p}{J_M}X + \dfrac{3n_p^2\varphi_M I}{2J_M}\cos(\alpha - \Delta\theta^{eq}) = 0$$

Le système est stable si les trois coefficients $1$, $\dfrac{f\,n_p}{J_M}$ et $\dfrac{3n_p^2\varphi_M I}{2J_M}\cos(\alpha - \Delta\theta^{eq})$ sont positifs.

Par définition des positions d'équilibre, l'équilibre $\Delta\theta^{eq} = \alpha - \alpha_0$ est stable tandis que l'équilibre $\Delta\theta^{eq} = \alpha + \alpha_0 - \pi$ est instable.

Il en résulte que la seule position d'équilibre stable est $\Delta\theta^{eq} = \alpha - \alpha_0$. La solution est donc :

$$\theta = \theta_s + \alpha - \alpha_0.$$

Ainsi, en utilisant cette expression de l'angle, on obtient la position du rotor.

## Revendications

1. Procédé de commande mis en oeuvre dans un variateur de vitesse pour le démarrage d'un moteur électrique synchrone (M) doté d'un rotor et connecté par des phases de sortie audit variateur de vitesse, ledit procédé étant **caractérisé en ce qu'**il comporte des étapes de :

   • application en entrée d'une vitesse de référence ($\omega$s) suivant un profil de vitesse continu prédéfini, ledit profil de vitesse débutant par une valeur initiale nulle, suivie d'une pente croissante jusqu'à une valeur maximale puis d'une pente décroissante vers une valeur finale nulle, afin de faire tourner le rotor dudit moteur,
   • détermination d'une position de référence ($\theta$s) à partir de la vitesse de référence appliquée en entrée,
   • détermination d'une tension (Vdq) dans un repère tournant à la vitesse du moteur électrique, à partir de la vitesse de référence appliquée en entrée,
   • détermination de tensions de commande (Va, Vb, Vc) à appliquer sur chaque phase de sortie en fonction d'une part de la position de référence déterminée et d'autre part de ladite tension déterminée dans le repère tournant,
   • application des tensions de commande (Va, Vb, Vc) sur chaque phase de sortie pour obtenir un alignement de la position du rotor dudit moteur sur la position de référence ($\theta$s).

2. Procédé selon la revendication 1, **caractérisé en ce que** l'étape de détermination de la tension dans le repère tournant est réalisée avec contrôle du courant et consiste à :

   • mesurer les courants (ia, ib, ic) circulant sur les phases de sortie,
   • transformer ces courants mesurés sur les trois phases de sortie en courant de flux mesuré et courant de couple mesuré,

• déterminer un courant de flux de référence (idref) et d'un courant de couple de référence (iqref) à partir de la vitesse de référence injectée en entrée,
• déterminer la tension dans le repère tournant grâce à un régulateur à action proportionnelle intégrale recevant en entrée le courant de flux (id) mesuré, le courant de couple (iq) mesuré, le courant de flux de référence (idref) et le courant de couple de référence (iqref).

3. Procédé selon la revendication 1, **caractérisé en ce que** l'étape de détermination de la tension dans le repère tournant est réalisée sans contrôle du courant en appliquant une loi de commande de type U/F.

4. Système de commande agencé dans un variateur de vitesse pour le démarrage d'un moteur électrique synchrone (M) doté d'un rotor et connecté par des phases de sortie audit variateur de vitesse, ledit système étant **caractérisé en ce qu'**il comporte:

• un module d'application en entrée d'une vitesse de référence (ωs) suivant un profil de vitesse continu prédéfini, ledit profil de vitesse débutant par une valeur initiale nulle, suivie d'une pente croissante jusqu'à une valeur maximale puis d'une pente décroissante vers une valeur finale nulle, afin de faire tourner le rotor dudit moteur,
• un module de détermination d'une position de référence (θs) à partir de la vitesse de référence appliquée en entrée,
• un module de détermination d'une tension (Vdq) dans un repère tournant à la vitesse du moteur électrique, à partir de la vitesse de référence appliquée en entrée,
• un module de détermination de tensions de commande (Va, Vb, Vc) à appliquer sur chaque phase de sortie en fonction d'une part de la position de référence déterminée et d'autre part de ladite tension déterminée dans le repère tournant,
• un module d'application des tensions de commande (Va, Vb, Vc) sur chaque phase de sortie pour obtenir un alignement de la position du rotor dudit moteur sur la position de référence (θs).

5. Système selon la revendication 4, **caractérisé en ce que** le module de détermination de la tension dans le repère tournant est mis en oeuvre avec contrôle du courant et comporte :

• un module de mesure des courants (ia, ib, ic) circulant sur les phases de sortie,
• un module de transformation des courants mesurés sur les trois phases de sortie en courant de flux mesuré et courant de couple mesuré,
• un module de détermination dun courant de flux de référence (idref) et un courant de couple de référence (iqref) à partir de la vitesse de référence injectée en entrée,
• un module de détermination de la tension dans le repère tournant grâce à un régulateur à action proportionnelle intégrale recevant en entrée le courant de flux (id) mesuré, le courant de couple (iq) mesuré, le courant de flux de référence (idref) et le courant de couple de référence (iqref).

6. Système selon la revendication 4, **caractérisé en ce que** le module de détermination de la tension dans le repère tournant est mis en oeuvre sans contrôle du courant en appliquant une loi de commande de type U/F.

**Patentansprüche**

1. Steuerungsverfahren, das in einem Frequenzumrichter zum Anlassen eines elektrischen Synchronmotors (M) umgesetzt wird, der mit einem Rotor versehen ist, und durch Ausgangsphasen mit dem Frequenzumrichter verbunden ist, wobei das Verfahren **dadurch gekennzeichnet ist, dass** es Schritte beinhaltet zum:

• Anwenden am Eingang einer Referenzgeschwindigkeit (ωs) gemäß einem zuvor definierten durchgehenden Geschwindigkeitsprofil, wobei das Geschwindigkeitsprofil mit einem Null-Anfangswert beginnt, gefolgt von einer steigenden Flanke bis zu einem maximalen Wert, danach einer fallenden Flanke bis zu einem Null-Endwert, um den Rotor des Motors drehen zu lassen,
• Bestimmen einer Referenzposition (Os) ausgehend von der am Eingang angewandten Referenzgeschwindigkeit,
• Bestimmen einer Spannung (Vdq) in einem Koordinatensystem, das sich mit der Geschwindigkeit des Elektromotors dreht, ausgehend von der am Eingang angewandten Referenzgeschwindigkeit,
• Bestimmen von Steuerspannungen (Va, Vb, Vc), die an jede Ausgangsphase anzulegen sind, in Abhängigkeit von einerseits der bestimmten Referenzposition und andererseits der im sich drehenden Koordinatensystem bestimmten Spannung,
• Anlegen der Steuerspannungen (Va, Vb, Vc) an jede Ausgangsphase, um eine Ausrichtung der Position des Rotors des Motors auf die Referenzposition ($\Theta$s) zu erhalten.

**2.** Verfahren nach Anspruch 1, **dadurch gekennzeichnet, dass** der Schritt des Bestimmens der Spannung in dem sich drehenden Koordinatensystem samt Kontrolle des Stroms durchgeführt wird, und darin besteht:

• die Ströme (ia, ib, ic) zu messen, die in den Ausgangsphasen zirkulieren,
• diese in den drei Ausgangsphasen gemessenen Ströme in gemessenen Flussstrom und gemessenen Momentstrom umzuwandeln,
• einen Referenzflussstrom (idref) und einen Referenzmomentstrom (iqref) aus der am Eingang injizierten Referenzgeschwindigkeit zu bestimmen,
• die Spannung in dem sich drehenden Koordinatensystem dank eines Proportional-Integral-Reglers zu bestimmen, der am Eingang den gemessenen Flussstrom (id), den gemessenen Momentstrom (iq), den Referenzflussstrom (idref) und den Referenzmomentstrom (iqref) empfängt.

**3.** Verfahren nach Anspruch 1, **dadurch gekennzeichnet, dass** der Schritt des Bestimmens der Spannung in dem sich drehenden Koordinatensystem ohne Kontrolle des Stroms unter Anwendung eines U/F-Regelungsgesetzes durchgeführt wird.

**4.** Steuerungssystem, das in einem Frequenzumrichter zum Anlassen eines elektrischen Synchronmotors (M) angeordnet ist, der mit einem Rotor versehen ist, und durch Ausgangsphasen mit dem Frequenzumrichter verbunden ist, wobei das System **dadurch gekennzeichnet ist, dass** es beinhaltet:

• ein Modul zum Anwenden am Eingang einer Referenzgeschwindigkeit ($\omega$s) nach einem zuvor definierten durchgehenden Geschwindigkeitsprofil, wobei das Geschwindigkeitsprofil mit einem Null-Anfangswert beginnt, gefolgt von einer steigenden Flanke bis zu einem maximalen Wert, danach einer fallenden Flanke bis zu einem Null-Endwert, um den Rotor des Motors drehen zu lassen,
• ein Modul zum Bestimmen einer Referenzposition ($\Theta$s) ausgehend von der am Eingang angewandten Referenzgeschwindigkeit,
• ein Modul zum Bestimmen einer Spannung (Vdq) in einem Koordinatensystem, das sich mit der Geschwindigkeit des Elektromotors dreht, ausgehend von der am Eingang angewandten Referenzgeschwindigkeit,
• ein Modul zum Bestimmen von Steuerspannungen (Va, Vb, Vc), die an jede Ausgangsphase anzulegen sind, in Abhängigkeit von einerseits der bestimmten Referenzposition und andererseits der im sich drehenden Koordinatensystem bestimmten Spannung,
• ein Modul zum Anlegen der Steuerspannungen (Va, Vb, Vc) an jede Ausgangsphase, um eine Ausrichtung der Position des Rotors des Motors auf die Referenzposition ($\Theta$s) zu erhalten.

**5.** System nach Anspruch 4, **dadurch gekennzeichnet, dass** das Modul zum Bestimmen der Spannung in dem sich drehenden Koordinatensystem samt Kontrolle des Stroms durchgeführt wird, und beinhaltet:

• ein Modul zum Messen der Ströme (ia, ib, ic), die in den Ausgangsphasen zirkulieren,
• ein Modul zum Umwandeln der in den drei Ausgangsphasen gemessenen Ströme in gemessenen Flussstrom und gemessenen Momentstrom,
• ein Modul zum Bestimmen eines Referenzflussstroms (idref) und eines Referenzmomentstroms (iqref) aus der am Eingang injizierten Referenzgeschwindigkeit,
• ein Modul zum Bestimmen der Spannung in dem sich drehenden Koordinatensystem dank eines Proportional-Integral-Reglers zu bestimmen, der am Eingang den gemessenen Flussstrom (id), den gemessenen Momentstrom (iq), den Referenzflussstrom (idref) und den Referenzmomentstrom (iqref) empfängt.

**6.** System nach Anspruch 4, **dadurch gekennzeichnet, dass** das Modul zum Bestimmen der Spannung in dem sich drehenden Koordinatensystem ohne Kontrolle des Stroms unter Anwendung eines U/F-Regelungsgesetzes durchgeführt wird.

**Claims**

**1.** Control method used in a variable speed drive for starting a synchronous electric motor (M) provided with a rotor and connected by output phases to said variable speed drive, said method being **characterised in that** it includes steps of:

- applying as an input a reference speed ($\omega$s) according to a predefined continuous speed profile, said speed profile beginning with a zero initial value, followed by a slope increasing to a maximum value and then a slope decreasing to a zero final value, to rotate the rotor of said motor,
- determining a reference position ($\theta$s) from the reference speed applied as an input,
- determining a voltage (Vdq) in a reference frame rotating at the speed of the electric motor, from the reference speed applied as an input,
- determining control voltages (Va, Vb, Vc) to be applied to each output phase according firstly to the determined reference position and secondly to said voltage determined in the rotating reference frame,
- applying control voltages (Va, Vb, Vc) to each output phase to obtain an alignment of the position of the rotor of said motor on the reference position ($\theta$s).

2. Method according to claim 1, **characterised in that** the step of determining the voltage in the rotating reference frame is implemented with control of the current and consists in:

- measuring the currents (ia, ib, ic) circulating on the output phases,
- transforming these currents measured on the three output phases into measured flow current and measured torque current,
- determining a reference flow current (idref) and a reference torque current (iqref) from the reference speed injected as an input,
- determining the voltage in the rotating reference frame by means of an integral proportional-action regulator receiving as an input the measured flow current (id), the measured torque current (iq), the reference flow current (idref) and the reference torque current (iqref).

3. Method according to claim 1, **characterised in that** the step of determining the voltage in the rotating reference frame is implemented without control of the current by applying a control law of the U/F type.

4. Control system arranged in a variable speed drive for starting a synchronous electric motor (M) provided with a rotor and connected by output phases to said variable speed drive, said system being **characterised in that** it includes:

- a module for applying as an input a reference speed ($\omega$s) according to a predefined continuous speed profile, said speed profile beginning with a zero initial value, followed by an increasing slope to a maximum value and then a decreasing slope to a zero final value, in order to rotate the rotor of said motor,
- a module for determining a reference position ($\theta$s) from the reference speed applied as an input,
- a module for determining a voltage (Vdq) in a reference frame rotating at the speed of the electric motor, from the reference speed applied as an input,
- a module for determining control voltages (Va, Vb, Vc) to be applied to each output phase according firstly to the determined reference position and secondly to said voltage determined in the rotating reference frame,
- a module for applying control voltages (Va, Vb, Vc) to each output phase to obtain an alignment of the position of the rotor of said motor on the reference position ($\theta$s).

5. System according to claim 4, **characterised in that** the module for determining the voltage in the rotating reference frame is used with control of the current and includes:

- a module for measuring the currents (ia, ib, ic) circulating on the output phases,
- a module for transforming the currents measured on the three output phases into measured flow current and measured torque current,
- a module for determining a reference flow current (idref) and a reference torque current (iqref) from the reference speed injected as an input,
- a module for determining the voltage in the rotating reference frame by means of an integral proportional-action regulator receiving as an input the measured flow current (id), the measured torque current (iq), the reference flow current (idref) and the reference torque current (iqref).

6. System according to claim 4, **characterised in that** the module for determining the voltage in the rotating reference frame is used without control of the current by applying a control law of the U/F type.

**Fig. 1**

**Fig. 2**

**Fig. 3**

**Fig. 4A**

**Fig. 4B**

**Fig. 4C**

**Fig. 4D**

**Fig. 5A**

**Fig. 5B**

**Fig. 5C**

**Fig. 5D**

**Fig. 6A**

**Fig. 6B**

**Fig. 6C**

**Fig. 6D**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 1060287 A
- US 7202618 B
- EP 1213828 A1